# EUROPEAN PATENT APPLICATION

(11) **EP 3 786 812 A1**
(43) Date of publication of application: **03.03.2021**
(21) Application number: 19842116.6
(22) Date of filing: 22.07.2019
(51) Int. Cl.: G06F 16/903, G06F 3/16, G06F 16/432, G10L 15/22, G06N 3/08

(54) **ELECTRONIC DEVICE AND CONTROL METHOD THEREFOR**

(30) Priority: 20.07.2018 KR 20180084961; 19.07.2019 KR 20190087731
(71) Applicant: Samsung Electronics Co., Ltd., Suwon-si 16677 (KR)
(72) Inventor: CHOI, Wonjong, Suwon-si Gyeonggi-do 16677 (KR); KIM, Soofeel, Suwon-si Gyeonggi-do 16677 (KR); HAM, Jina, Suwon-si Gyeonggi-do 16677 (KR)
(74) Representative: Appleyard Lees IP LLP
(86) International application number: PCT/KR2019/009035
(87) International publication number: WO 2020/022723

(57) **Abstract**

An electronic device and a control method therefor are disclosed. A control method for an electronic device, according to the present disclosure, comprises the steps of: acquiring information about an application being executed and storing the same in a memory, when a user command is inputted during execution of the application; and inputting a user question related to the application in a learned artificial intelligence model so as to output an answer to the acquired user question, when the user question related to the application is inputted, wherein the answer to the user question can be determined on the basis of the information about the application being executed.

## Description

### [Technical Field]

The disclosure relates to an electronic device and a control method therefor. More particularly, the disclosure relates to an electronic device capable of providing an optimized reply with respect to a user question based on a personalized database and a control method therefor.

### [Background Art]

An artificial intelligence (AI) system may be a computer system which realizes 'system in which a machine becomes smart through self-learning and identifying. Because the artificial intelligence system improves in recognition rate the more it is used and may more clearly understand a preference of a user, the existing rule based smart system are gradually being replaced with deep learning based artificial intelligence systems.

The artificial intelligence technology is comprised of machine learning (deep learning) and element technologies utilizing machine learning.

The machine learning may be an algorithm technology that classifies/learns features of input data on its own, and element technology may be technology that utilizes machine learning algorithms such as deep learning, and may be comprised on technical fields such as linguistic understanding, visual understanding, inference/prediction, knowledge representation, and motion control.

The various fields to which artificial intelligence technology may be applied is described in the following. Linguistic understanding is a technique in which language/character of humans is recognized and applied/processed and includes natural language processing, machine translation, dialog system, question and answer, speech recognition/synthesis, and the like. Visual understanding is a technique that processes things as recognized visually by a human, and includes object recognition, object tracking, image search, human recognition, scene understanding, space understanding, image enhancement, and the like. Inference prediction is a technique that determines information by logical inference and prediction, and includes knowledge/likelihood based inference, optimization prediction, preference based planning, recommendation and the like. Knowledge representation is a technique that automatically processes experience information of humans to knowledge data and includes knowledge construction (generating/classifying data), knowledge management (utilizing data), and the like. Motion control is a technique for controlling the autonomous driving of a vehicle and the movement of a robot, and includes movement control (navigation, collision, driving), manipulation control (behavior control), and the like.

In many cases, the artificial intelligence technology may generally be operated in an external server. However, based on the data used in the artificial intelligence technology being data related to personal information, problems related security may arise.

### [Disclosure]

### [Technical Problem]

The disclosure provides an electronic device capable of providing an optimized reply with respect to a user question based on a personalized database and a control method therefor.

### [Technical Solution]

According to an embodiment, a control method of an electronic device includes obtaining, based on a user command being input while an application is executed, at least one from among a type of the application, a content information related to the application being executed, and a function used through the application, and storing in a memory, and inputting, based on a user question related to the application being input, the user question related to the application to a trained artificial intelligence model and outputting a reply with respect to the obtained user question, and the reply to the user question is determined based on at least one from among the type of the application, the content information related to the application being executed, and the function used through the application.

The storing may include obtaining at least one from among a type of the application, a content information related to the application being executed, and the function used through the application and storing in the database.

The storing may include extracting, based on the application being executed comprising text, key information of the text and storing.

The storing may include storing, based on a user interaction which performs a function on the application being executed being detected, a history information including information on the performed function and the user interaction.

The outputting may include outputting at least one from among providing a search result with respect to the user question, performing an action with respect to the user question, and performing an application function with respect to the user question.

The outputting may include recommending, based on the user question being a question related to content search, an application for playing back the searched content based on information related to the application.

The outputting may include transmitting, based on the user question being input, the user question to an external server, receiving, from the external server, a reply candidate with respect to the user question, and outputting a reply with respect to the user question based on the received reply candidates and the information stored in the database.

The storing may include storing at least one from among a domain information on the application being executed and a type of the application, content information related to the application being executed and the function used through the application, and the artificial intelligence model may be characterized by obtaining a reply with respect to the user question based on at least one from among the stored domain information and the type of the application, the content information related to the application being executed and the function used through the application.

The user question may be at least one of a user speech or a text.

According to an embodiment, an electronic device obtains, based on a user command being input while an application is executed, at least one from among a type of the application, a content information related to the application being executed, and a function used through the application and stores in the memory, inputs, based on a user question related to the application being input, the user question related to the application to a trained artificial intelligence model and outputs a reply to the obtained user question, and the user question

The processor may be configured to obtain at least one from among a type of the application, a content information related to the application being executed, and a function used through the application and store in the memory.

The processor may be configured to extract, based on the application being executed including a text, key information of the text and store in the memory.

The processor may be configured to store, based on a user interaction performing a function on the application being executed being detected, a history information including information on the performed function and information on the user interaction in the memory.

The processor may be configured to output at least one from among providing a search result with respect to the user question, performing an action with respect to the user question, and performing an application function with respect to the user question.

The processor may be configured to recommend, based on the user question being a question related to the content search, an application for playing back the searched content based on information related to the application.

The electronic device may further include a communicator, and the processor may be configured to transmit, based on the user question being input, the user question to an external server through the communicator, receive a reply candidate with respect to the user question from the external server through the communicator, and output a reply to the user question based on the received reply candidates and information stored in the memory.

The processor may be configured to store, in the memory, at least one from among a domain information on the application being executed and a type of the application, content information related to the application being executed and a function used through the application, and the artificial intelligence model may be configured to obtain a reply to the user question based on at least one from among the stored domain information and type of the application, content information related to the application being executed, and the function used through the application.

The user question may be at least one of a user speech or a text.

### [Effect of Invention]

According to various embodiments, the electronic device may use the artificial intelligence model to concurrently protect the privacy of the user and to output a user customized reply.

### [Description of Drawings]

FIG. 1 is an example view illustrating in brief an operation of an electronic device according to the disclosure;
FIG. 2 is a block diagram illustrating in brief a configuration of an electronic device according to an embodiment of the disclosure;
FIG. 3 is a block diagram illustrating in detail an electronic device according to an embodiment of the disclosure;
FIG. 4 is a block diagram illustrating a dialog system according to an embodiment of the disclosure;
FIGS. 5A and 5B are example views illustrating data which is stored in a knowledge database according to an embodiment of the disclosure;
FIG. 6 is an example view illustrating a method of classifying a domain (or, category) of data which is stored in a knowledge database according to an embodiment of the disclosure;
FIG. 7 is an example view illustrating a domain management method according to an embodiment of the disclosure;
FIG. 8 is an example view illustrating a method of obtaining data which is stored in a knowledge database according to an embodiment of the disclosure;
FIG. 9 is an example view illustrating a method of outputting a question with respect to a user speech based on an electronic device operating an application according to an embodiment of the disclosure;
FIGS. 10A and 10B are example views illustrating a method of recommending an application operation of user according to another embodiment of the disclosure;
FIGS. 11A and 11B are example views illustrating various embodiments according to the disclosure;
FIG. 12 is an example view illustrating an operation of an electronic device and a server according to an embodiment of the disclosure;
FIG. 13 is a system diagram illustrating an operation of an electronic device and a server according to an embodiment of the disclosure;
FIG. 14 is a system diagram illustrating an operation of an electronic device and a server according to another embodiment of the disclosure; and
FIG. 15 is a flowchart illustrating a control method of an electronic device according to an embodiment of the disclosure.

### [Detailed Description of Exemplary Embodiments]

Various embodiments of the disclosure will be described herein with reference to the accompanying drawings. However, it should be noted that the various embodiments are not for limiting the scope of the disclosure to a specific embodiment, but should be interpreted to include all modifications, equivalents and/or alternatives of the embodiments. In describing the embodiments, like reference numerals may be used to refer to like elements.

Expressions such as "comprise," "may comprises," "include," or "may include" and the like used herein may designate a presence of a characteristic (e.g., element such as number, function, operation or component), and not preclude a presence of other characteristics.

In the disclosure, expressions such as "A or B," "at least one from among A and/or B," or "one or more of A and/or B" may include all possible combinations of the items listed together. For example, "A or B," "at least one from among A and B," or "at least one from among A or B" may refer to all cases including (1) at least one from among A, (2) at least one from among B, or (3) both of at least one from among A and at least one from among B.

Expressions such as "first," "second," "1st," "2nd," or so on used in the disclosure may modify various elements regardless of order and/or importance, and may be used only to distinguish one element from another, but not limit the corresponding elements.

When a certain element (e.g., first element) is indicated as being "(operatively or communicatively) coupled with/to" or "connected to" another element (e.g., second element), it may be understood as the certain element being directly coupled with/to the other element or as being coupled through another element (e.g., third element). On the other hand, when a certain element (e.g., first element) is indicated as "directly coupled with/to" or "connected to" another element (e.g., second element), it may be understood as another element (e.g., third element) not being present between the certain element and the other element.

The expression "configured to... (or set up to)" used in the disclosure may be used interchangeably with, for example, "suitable for...," "having the capacity to...," "designed to...," "adapted to...," "made to...," or "capable of..." based on circumstance. The term "configured to... (or set up to)" may not necessarily mean "specifically designed to" in terms of hardware. Rather, in a certain circumstance, the expression "a device configured to..." may mean something that the device "may perform..." together with another device or components. For example, the phrase "a sub-processor configured to (or set up to) perform A, B, or C" may mean a dedicated processor for performing a corresponding operation (e.g., embedded processor), or a generic-purpose processor (e.g., a central processing unit (CPU) or an application processor) capable of performing the corresponding operations by executing one or more software programs stored in the memory device.

An electronic device in accordance with various embodiments of the disclosure may include at least one from among, for example, and without limitation, a smartphone, a tablet personal computer (PC), a mobile phone, a video telephone, an electronic book reader, a desktop PC, a laptop PC, a netbook computer, a workstation, a server, a personal digital assistance (PDA), a portable multimedia player (PMP), a MP3 player, a medical device, a camera, or a wearable device. The wearable device may include at least one from among an accessory type (e.g., a watch, a ring, a bracelet, an anklet, a necklace, a pair of glasses, a contact lens or a head-mounted-device (HMD)), a fabric or a garment-embedded type (e.g., an electronic clothing), a skin-attached type (e.g., a skin pad or a tattoo), or a bio-implantable circuit. In some embodiments, the electronic device may include at least one from among, for example, and without limitation, a television, a digital video disk (DVD) player, an audio, a refrigerator, a cleaner, an oven, a microwave, a washing machine, an air purifier, a set top box, a home automation control panel, a security control panel, a media box (e.g., Samsung HomeSync™, Apple TV™, or Google TV™), a game console (e.g., Xbox™, PlayStation™), an electronic dictionary, an electronic key, a camcorder, an electronic frame, or the like.

In another embodiment, the electronic device may include at least one from among various medical devices (e.g., various portable medical measurement device (e.g., glucose measuring device, a heart rate measuring device, a blood pressure measuring device, a temperature measuring device, etc.), a navigation device, a global navigation satellite system (GNSS), an event data recorder (EDR), a flight data recorder (FDR), a vehicle infotainment device, a nautical electronic equipment (e.g., nautical navigation device, gyro compass, etc.), an avionics electronic device, a security device, a vehicle head unit, an industrial or personal robot, a drone, an automated teller machine (ATM) of financial institutions, a point of sales (POS) of shops, or internet of things device (e.g., light bulbs, various sensors, sprinkler devices, fire alarms, temperature adjusters, street lights, toasters, exercise equipment, hot water tanks, heater, boilers, etc.)).

In this disclosure, the term "user" may refer to a person using an electronic device or a device (e.g., artificial intelligence electronic device) that uses an electronic device.

The disclosure will be described in greater detail below with reference to the accompanying drawings.

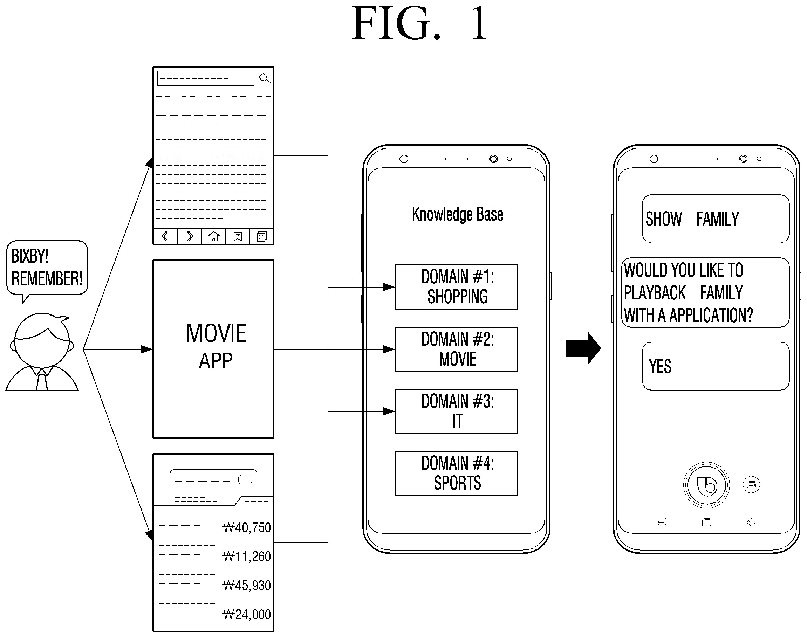

FIG. 1 is an example view illustrating in brief an operation of an electronic device according to the disclosure.

The electronic device 100 may store an application use, a content use, a web content use, or the like of the user in the knowledge database 460, and based on a user question being input, output a response on the user question based on the knowledge database 460.

Specifically, the electronic device 100 may determine a domain for data to be stored based on the application use, the content use, the web content use, or the like of the user, and when the domain is determined, store data on the application use, the content use, and the web content use of the user in the determined domain.

For example, the electronic device 100 may store an operation order of the application of the user in the knowledge database 460, and if the user executes the corresponding determine a domain related to the executed application, and control the application according to the operation order of the application stored based on the data stored in the determined domain. Alternatively, the electronic device 100 may, based on reserving a movie ticket through a movie application, determine a domain (e.g., movie domain) related to the movie application, and recommend transmitting the details confirming the reservation to another user based on the stored data in the domain. Alternatively, the electronic device 100 may store an action of the user executing content through a specific application in the knowledge database 460, determine a domain related to the corresponding content when a user command for playing back the corresponding content is input, obtain an application for playing back the corresponding content based on the data stored in the domain, and playback the corresponding content through the obtained application. Alternatively, the electronic device 100 may, based on a user command for bookmarking a specific content being input, determine the domain related to the bookmarked content, and bookmark the content related to the bookmarked content based on the data stored in the determined domain.

That is, the electronic device 100 may obtain various data based on various use history of the electronic device 100 and store in the knowledge database 460 by domain, and based on the user question being input, output a reply based on the question stored in the knowledge database 460.

The knowledge database 460 may refer to a database which stores data sets comprised of a subject data, an object data, and a predicate data according to a suitable schema. That is, the knowledge database 460 may express data and the type of connection relationship between the data in a generalized form (e.g., table form of a relationship-type database), and store the expressed data and the connection relationship type set between the data. The subject data may refer to data representing the subject to be expressed, the predicate data may refer to data representing the relationship of the subject and the object, and the object data may refer to data representing a content or value on the connection relationship. A set comprised of the subject data, the connection relationship data, and the object data may be referred to as a triple data.

The knowledge database 460 may be built by storing the triple data obtained, by the electronic device 100, through the web page or various applications in a relational database table form.

According to an embodiment, the electronic device 100 may obtain the triple data by performing morpheme analysis and parsing on an identified text on the web page. For example, if a text 'the population of Seoul is currently 9.77M' is on a web page, the electronic device 100 may perform morpheme analysis and parsing on the text and obtain a triple data comprised of 'Seoul (subject data), population (predicate data), 9.77M (object data).' The knowledge database 460 may be built by storing the triple data obtained by the electronic device 100 in a table form of a relational database as in Table 1.

**[Table 1]**

| subject data | predicate data | object data |
|---|---|---|
| Seoul | population | 9.77M |

According to another embodiment, the electronic device 100 may obtain triple data comprised of 'application name (subject data), performed function (predicate data), content name (object data)' based on a use of the application. For example, based on executing movie reservation in a movie application, the electronic device 100 may obtain triple data comprised of 'movie application name (subject data), movie reservation (predicate data), and movie title (object data).' Then, the knowledge database 460 may be built by storing the triple data obtained by the electronic device 100 in table form of a relational database as in Table 1.

**[Table 2]**

| subject data | predicate data | object data |
|---|---|---|
| movie application name | movie reservation | movie title |

According to an embodiment, the electronic device 100 may output a reply with respect to the user speech based on the triple data stored in the knowledge database 460. Specifically, based on a user speech which includes a question being input, the electronic device 100 may grasp the intent of the question by recognizing and analyzing the user speech, and determine whether the intent of the grasped question corresponds to any predicate data from among the triple data stored in the knowledge database 460. For example, based on the user speech of 'what time is good for OOO movie this Saturday?' being input, the electronic device 100 may grasp that the user intent is for 'movie reservation,' and identify data in which the connection relationship data stored in the knowledge database 460 is 'movie reservation.' Then, the electronic device 100 may identify the subject data in which the 'movie reservation' from among the triple data is the predicate data by using a relational data table stored in the knowledge database 460. Then the electronic device 100 may identify the subject data (movie application) with the most use frequency from among the identified subject data, and output a reply recommending movie reservation through an identified movie application.

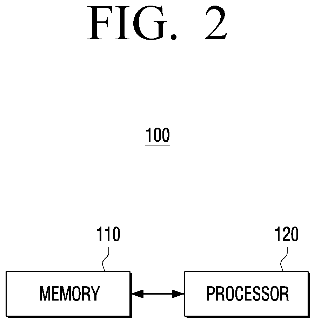

FIG. 2 is a block diagram illustrating in brief a configuration of an electronic device according to an embodiment of the disclosure. As illustrated in FIG. 2, the electronic device 100 may include a memory 110 and a processor 120.

The memory 110 may store an instruction or data related to at least one other elements of the electronic device 100. The memory 110 may be implemented as a nonvolatile memory, a volatile memory, a flash-memory, a hard disk drive (HDD), a solid state drive (SSD), or the like. The memory 110 may be accessed by the processor 120 and reading/writing/modifying/deleting/updating of data by the processor 120 may be performed. In the disclosure, the term 'memory' may include the memory 110, a read only memory (ROM; not shown) in the processor 120, a random access memory (RAM; not shown), or a memory card (not shown; e.g., a micro SD card, a memory stick) mounted to the electronic device 100. Further, the memory 110 may store a program, data, and the like for configuring various screens to be displayed in the display area of a display 150.

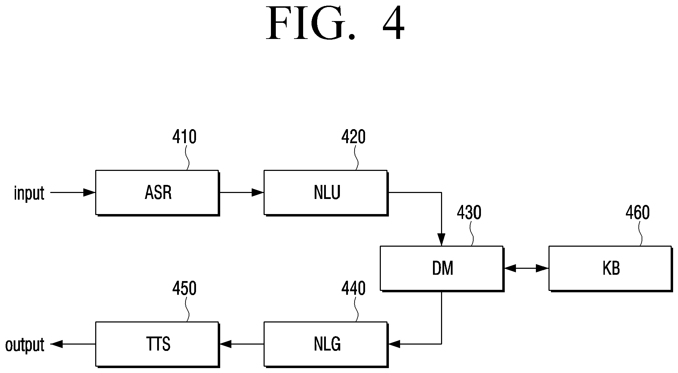

In addition, the memory 110 may store a dialog system providing a response to user input (i.e., specifically, user speech). As illustrated in FIG. 4, the dialog system may include an automatic speech recognizer (ASR) 410, a natural language understanding (NLU) part 420, a dialog manager (DM) 430, a natural language generator (NLG) 440, a text-to-speech (TTS) 450, and a knowledge database 460.

The automatic speech recognizer 410 may perform speech recognition on user voice input through a microphone and the like. The natural language understanding part 420 may comprehend intent of user speech based on the speech recognition results. The dialog manager 430 may obtain information on a response to user speech based on natural language understanding results and data stored in the knowledge database 460. For example, the dialog manager 430 may obtain information for generating a response, and as described above, the obtained information may be determined based on the intent of the user speech grasped through the natural language understanding part 420 and data stored in the knowledge database 460. The natural language generator 440 may, as a response to user speech based on information obtained through the dialog manager 430, obtain a natural language. The TTS 450 may convert the obtained natural language to speech. Accordingly, the dialog system may provide a response to the user speech in voice, and the user may carry out a dialog with the electronic device 100.

The natural language generator 440 according to an embodiment may input information obtained through the dialog manager 430 and the knowledge database 460 as input value of the artificial intelligence model and obtain a natural language as a response to user speech.

The knowledge database 460 may store data for a personalized response. The data stored in the knowledge database 460 may be varied. According to an embodiment, the knowledge database 460 may store at least one from among a type of application used by the electronic device 100, content information related to the application, and functions used through the application. According to another embodiment, the knowledge database 460 may store key information of text included in the application. According to another embodiment, when user interaction performing a function with respect to an application in use is detected, the knowledge database 460 may store the performed function and the information on the used user interaction. According to another embodiment, the knowledge database 460 may store category information on the application being executed and knowledge information on the application being executed. According to another embodiment, the knowledge database 460 may store information related to the continuous use of the application, information related to the operation of the application, or based on using content of similar type when using a specific application, match information on the specific application and information on the specific type of content and store it. Here, information on the application may be at least one from among the type of the application, content information related to the application being executed, and the function used through the application (payment function, search function, reservation function, etc.).

In addition, the memory 110 may store an artificial intelligence (AI) agent for operating the dialog system. Specifically, the electronic device 100 may use the artificial intelligence agent for generating a natural language as a response to user speech. The artificial intelligence agent, as a dedicated program for providing an artificial intelligence based service (e.g., voice recognition service, personal assistant service, translation service, search service, etc.), may be executed by a conventional generic-purpose processor (e.g., CPU) or a separate AI dedicated processor (e.g., GPU, etc.).

Based on the user speech being input, the artificial intelligence agent may operate. The artificial intelligence agent may obtain a reply by inputting the user question to the trained artificial intelligence learning model.

If a user speech (i.e., specifically, a trigger speech for executing an artificial intelligence function) is input or if a pre-set button (i.e., a button for executing a personal assistant function of the artificial intelligence) is selected, the artificial intelligence agent may operate. Alternatively, the artificial intelligence agent may be in a pre-executed state prior to the user speech being input or the pre-set button being selected. In this case, the artificial intelligence agent of the electronic device 100 may obtain a reply to the user question after the user speech is input or the pre-set button is input. In addition, the artificial intelligence agent may be in a standby state prior to the user speech being input or the pre-set button being selected. The standby state refers to a state which detects a pre-defined user input being received to control an operation start of the artificial intelligence agent. If the user speech is input or the pre-set button is selected while the artificial intelligence agent is in the standby state, the electronic device 100 may operate the artificial intelligence agent and obtain a natural language as a response to the user speech. The artificial intelligence agent may control the various modules to be described hereafter, which will be described in detail below.

In addition, according to an embodiment, the memory 110 may store an artificial intelligence model trained to generate (or, obtain) a reply with respect to the user question. The trained artificial intelligence model according to the disclosure may be built considering the application field of the recognition model, the computer performance of the device, or the like. For example, the artificial intelligence model may use the information obtained from the dialog manager 430 and the knowledge database 460 as input data and be trained to obtain a natural language. In order to generate a natural language that is natural, the trained artificial intelligence model may be a model based on, for example, a neural network. The artificial intelligence model may be designed to simulate the human brain structure, and may include a plurality of network nodes which simulate the neurons of a neural network and have weighted value. The plurality of network nodes may each establish a connection relationship so that the neurons simulate the synaptic activity of the neurons sending and receiving signals through the synapse. In addition, a document summary model may include a neural network model or a deep learning model developed from a neural network model. In the deep learning model, a plurality of network nodes are located at different depths (or layers), and may transmit and receive data according to a convolution connection relationship. Examples of the trained artificial intelligence model may include, but are not limited to, deep neural network (DNN), recurrent neural network (RNN), and bidirectional recurrent deep neural network (BRDNN).

In addition, in the above-described embodiment, the artificial intelligence model has been described as being stored in the electronic device 100, but this is merely one embodiment, and the artificial intelligence model may be stored in another electronic device. For example, the artificial intelligence model may be stored in at least one or more external servers. The electronic device 100 may receive input of the user speech and transmit the received user speech to an external server stored with the artificial intelligence model, and the artificial intelligence model stored in the external server may input the user speech received from the electronic device 100 as input value and output the result.

The processor 120 may be electrically connected with the memory 110 and control the overall operation and function of the electronic device 100.

The processor 120 may execute an application stored in the memory 110. When a user command is input while the application is being executed, the processor 120 may obtain at least one from among the type of application being executed, content information related to the application being executed, and the function used through the application and store in the memory 110. Specifically, when a user command is input while the application is being executed, the processor 120 may obtain at least one from among the type of application being executed, the content information related to the application being executed, and the function used through the application and store in the knowledge database 460. When a user question related to the application is input as an input value to the trained artificial intelligence model, the processor 120 may, output a reply to the user question which is determined based on at least one from among the type of application being executed, the content information related to the application being executed, and the function used through the application stored in the knowledge database 460.

The reply output by the processor 120 may be at least one from among a reply providing a search result with respect to the user question, a reply forming an action with respect to the user question, and a reply performing a function of the application with respect to the user question.

Based on the user question being a question related to the content search, the processor 120 may recommend an application for playing back content which was searched based on information related to the application.

The processor 120 may obtain a reply to the user question based on at least one from among the stored domain information, the type of application being executed, the content information related to the application being executed and the function used through the application.

When the user question is input, the processor 120 may transmit the user question to the external server, and receive a reply candidate with respect to the user question input from the external server. The processor 120 may output a reply with respect to the user question based on the received reply candidate and information stored in the knowledge database 460. The processor 120 may calculate the similarity between the received reply candidate and the data stored in the knowledge database 460 through the artificial intelligence model, and output a reply candidate with the highest similarity with the data of the knowledge database 460 from among the received reply candidates.

Although the user question in the disclosure has been described as a user speech, but the embodiment is not limited thereto. That is, the user question may be input in text form.

The function related to the artificial intelligence according to the disclosure may be operated through the processor 120 and the memory 110. The processor 120 may be comprised of one or a plurality of processors. The one or a plurality of processors may be a generic purpose processor such as a CPU, an AP, or the like, a graphics dedicated processor such as a GPU, a VPU, or the like, or an artificial intelligence dedicated processor such as an NPU.

The one or the plurality of processors may be configured to process the input data according to a pre-defined operation rule or the artificial intelligence model stored in the memory 110. The pre-defined operation rule or artificial intelligence model may be characterized by being created through learning.

Here, being created through learning refers to the pre-defined operation rule of a desired characteristic or artificial intelligence model being created by applying a learning algorithm to the plurality of learning data. The learning may be carried out in the device itself in which artificial intelligence is performed according to the disclosure, or may be carried out through a separate server/system.

The artificial intelligence model may be comprised of a plurality of neural network layers. Each layer may include a plurality of weighted values, and perform processing of the layer through a processing result of a previous layer and the processing of the plurality of weighted values. Examples of the neural network may include a Convolutional Neural Network (CNN), a Deep Neural Network (DNN), a Recurrent Neural Network (RNN), a Restricted Boltzmann Machine (RBM), a Deep Belief Network (DBN), a Bidirectional Recurrent Deep Neural Network (BRNDD), a Deep Q-Networks, or the like, and except for when the neural network is expressly described, the embodiment is not limited to the above-described examples.

The learning algorithm may be a method which uses a plurality of learning data to train a predetermined subject machine (e.g., robot) to determine or predict on its own. Examples of the learning algorithm include supervised learning, unsupervised learning, semi-supervised learning or reinforcement learning, and except for when the learning algorithm is expressly described in the disclosure, the embodiment is not limited to the above-described examples.

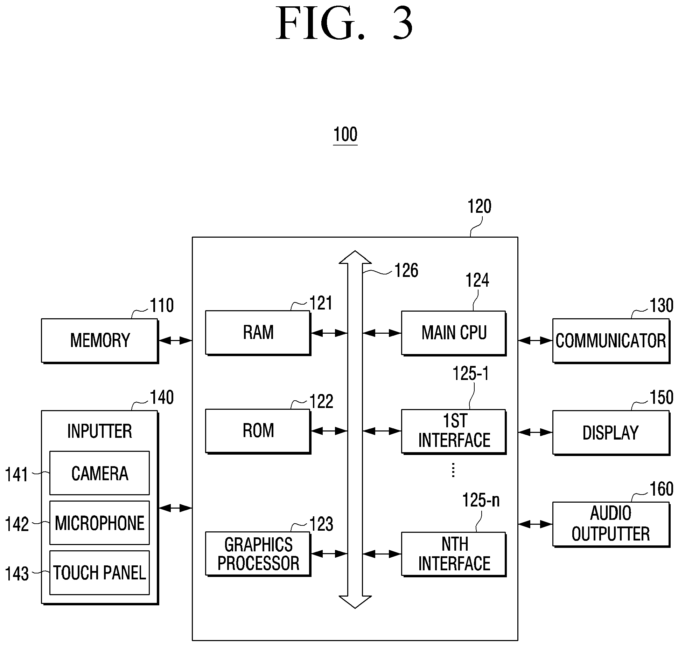

FIG. 3 is a block diagram illustrating in detail an electronic device according to an embodiment of the disclosure.

As illustrated in FIG. 3, the electronic device 100 may further include a communicator 130, an inputter 140, a display 150, and an audio outputter 160 in addition to the memory 110 and the processor 120. However, the embodiment is not limited to the above-described configuration, and a portion of the configuration may be added or omitted if necessary.

The communicator 130 may be a configuration for performing communication with the external device. According to an embodiment, the electronic device 100 may receive a plurality of reply candidates with respect to the user speech from the external server through the communicator 130.

The communicator 130 being communicatively connected with the external device may include communicating through a third device (relay, hub, access point, server, gateway, or the like). The wireless communication may include a cellular communication which uses at least one from among, for example, and without limitation, a long term evolution (LTE), an LTE advance (LTE-A), a code division multiple access (CDMA), a wideband CDMA (WCDMA), a universal mobile telecommunications system (UMTS), a wireless broadband (WiBro), or a global system for mobile communications (GSM). According to an embodiment, the wireless communication may include at least one from among, for example, and without limitation, wireless fidelity (WiFi), Bluetooth, Bluetooth low energy (BLE), ZigBee, near field communication (NFC), magnetic secure transmission, radio frequency (RF) or body area network (BAN). The wired communication may include at least one from among, for example, and without limitation, a universal serial bus (USB), a high definition multimedia interface (HDMI), a recommended standard 232 (RS-232), a power line communication (PLC), or plain old telephone service (POTS). A network in which the wireless communication or the wired communication is performed may include a telecommunication network, for example, at least one from among a computer network (e.g., local area network (LAN) or wide area network (WAN)), the Internet, or a telephone network.

The inputter 140 may be a configuration to receive input of a user command. The inputter 140 may include a camera 141, a microphone 142, and a touch panel 143.

The camera 141 may be a configuration for obtaining image data of the surroundings of the electronic device 100. The camera 141 may capture a still image or a moving image. For example, the camera 141 may include one or more image sensors (e.g., front sensor or rear sensor), lens, an image signal processor (ISP), or a flash (e.g., LED, xenon lamp, etc.). The microphone 142 may be a configuration for obtaining sounds surrounding the electronic device 100. The microphone 142 may receive input of an external acoustic signal and generate an electric speech information. The microphone 142 may use various noise removal algorithms for removing noise generated in the process of receiving an external acoustic signal. The image information or the speech information input through the camera 141 or the microphone 142 may be input as an input value of the artificial intelligence model.

The touch panel 143 may be a configuration capable of receiving input of various user inputs. The touch panel 143 may receive data by the user operation. The touch panel 143 may be configured by being coupled with a display which will be described below.

The inputter 140 may be of a variety of configurations for receiving various data in addition to the above described cameral 141, microphone 152, and the touch panel 143.

The display 150 may be a configuration for outputting a variety of images. The display 150 for providing a variety of images may be implemented as a display panel of various forms. For example, the display panel may be implemented with various display technologies such as, for example, and without limitation, a liquid crystal display (LCD), an organic light emitting diodes (OLED), an active-matrix organic light-emitting diodes (AM-OLED), a liquid crystal on silicon (LcoS), a digital light processing (DLP), or the like. In addition, the display 150 may be in a flexible display form and may be coupled to at least one from among a front surface area, a side surface area, a back surface area, and the like of the electronic device 100.

The audio outputter 160 may be a configuration which outputs not only various audio data to which various processing operations such as decoding, amplifying, and noise filtering have been performed by the audio processor, but also various notification sounds or voice messages. The audio processor may be an element which performs processing on audio data. In the audio processor, various processing such as decoding, amplifying, noise filtering, or the like with respect to the audio data may be performed. The audio data processed in the audio processor may be output to the audio outputter 160. The audio outputter may be implemented as a speaker, but this is merely one embodiment, and may be implemented as a output terminal capable of outputting audio data.

As described above, the processor 120 may control the overall operation of the electronic device 100. The processor 120 may include a RAM 121, a ROM 122, a main central processing unit (CPU) 123, a graphics processor 124, a 1st to nth interface 125-1 to 125-n, and a bus 156. The RAM 121, the ROM 122, the main CPU 123, the graphics processor 124, the first to nth interface 125-1 to 125-n, and the like may be interconnected through the bus 126.

In the ROM 122, an instruction set or the like for booking the system may be stored. When the turn-on instruction is input and power is supplied, the main CPU 123 may copy an operating system (O/S) stored in the memory to the RAM 121 based on the instruction stored in the ROM 122, execute the O/S, and boot the system. When booting is completed, the main CPU 123 may copy a variety of application programs stored in the memory to the RAM 121, and execute the application programs copied to the RAM 121 to perform a variety of operations.

The main CPU 123 may access a first memory 110 or a second memory (120), and use the O/S stored in the first memory 110 or the second memory (120) to perform booting. The main CPU 123 may use the various programs, content, data or the like stored in the first memory 110 or the second memory (120) to perform various operations.

The 1st to nth interface 125-1 to 125-n may be connected to the various elements described above. One from among the interfaces may become a network interface which connects with the external device through a network.

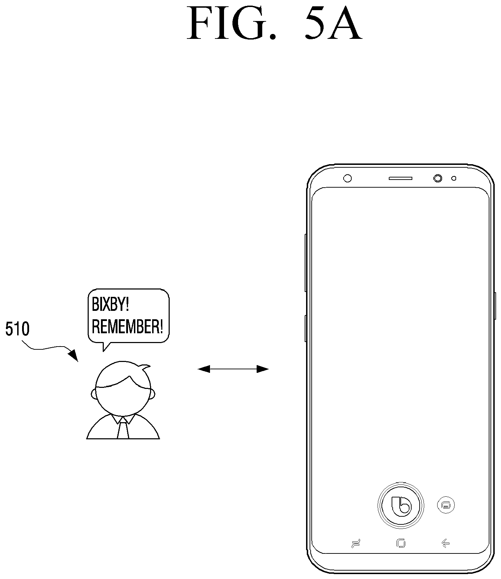

The various embodiments of the disclosure will be described below with reference to FIGS. 5A to 11B.

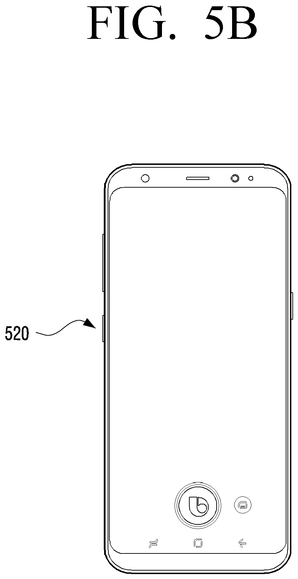

FIGS. 5A and 5B are example views illustrating data which is stored in a knowledge database according to an embodiment of the disclosure.

As illustrated in FIG. 5A, based on a pre-set user speech being input, the electronic device 100 may store the application being executed at the time the pre-set user command is input or the data related to the web content in the knowledge database 460. For example, based on a user command such as "Bixby! Remember!" 510 being input, the electronic device 100 may store the application being executed at the time the pre-set user speech is input or the data related to the web content in the knowledge database 460. The time the pre-set user speech is input refers to a pre-set time before or after the point in time the user speech is input.

As illustrated in FIG. 5B, when an operation pushing a button 520 provided in the electronic device 100 is detected, the electronic device 100 may store the application being executed at the time the pre-set user command is input or the data related to the web content in the knowledge database 460. The method to pushing the button 520 provided in the electronic device 100 may be varied. For example, the electronic device 100 may, based on an operation of pushing the button 520 for a pre-set time (e.g., 2 seconds) or the operation of pushing the button 520 by a pre-set number of times (e.g., 3 times), store the application being executed at the time the corresponding operation is detected or data related to the web content in the knowledge database 460.

However, the embodiment is not limited to the embodiments of FIGS. 5A and 5B, and the operation for storing data in the knowledge database 460 may be varied. For example, the electronic device 100 may, based on the application being executed or the web content satisfying a specific condition, store the corresponding application or data related to the web content in the knowledge database 460. The specific condition may be, for example, a condition for using the application or the web content by a pre-set number of times. Alternatively, the specific condition may be condition for using the application or web content for a pre-set time. Alternatively, the specific condition may be a condition for using all applications or web content detected by the electronic device 100. Alternatively, the specific condition may be a condition related to a touch input of bookmarking a specific web content.

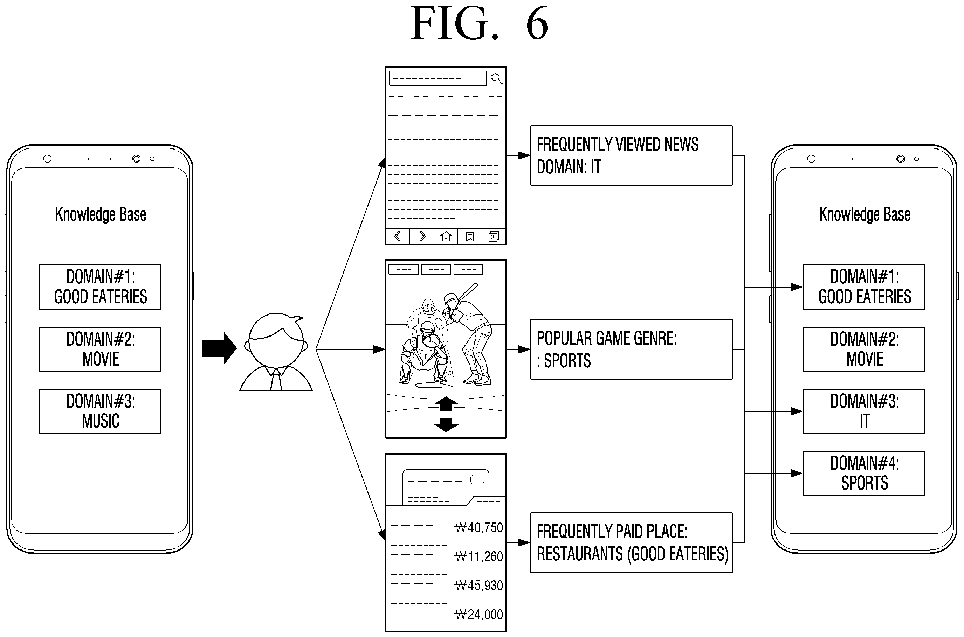

FIG. 6 is an example view illustrating a method of classifying a domain (or, category) of data which is stored in a knowledge database according to an embodiment of the disclosure.

According to an embodiment described above, when data related to the application or web content for storing in the knowledge database 460 is determined, the electronic device 100 may determine the domain (or, category) of the determined data.

Specifically, the electronic device 100 may determine the domain based on the content of the application being executed or the web content.

For example, as illustrated in FIG. 6, based on the electronic device 100 executing a news article in a browser application, the electronic device 100 may determine a domain based on the content of the new article being executed. The determined domain may be, for example, an IT domain.

Alternatively, based on the electronic device 100 executing a game application, the electronic device 100 may determine the domain based on the game application being executed. The domain determined at this time may be, for example, a sports domain.

Alternatively, based on the electronic device 100 executing an application related to the payment details, the electronic device 100 may determine a domain based on the payment details. For example, if a plurality of frequented eatery from among the payment details are present, the determined domain may be a good eateries domain.

The domain may be stored in the knowledge database 460. If a new domain needs to be added, the electronic device 100 may add a new domain corresponding to the data related to the application or the web content. The domain to be added may be one from among the domains stored in the external server. The domain may be added or deleted by the user command.

Based on there being no data to add to the domain from among the domains within the knowledge database 460 for a pre-set time, the electronic device 100 may delete the corresponding domain. That is, the electronic device 100 may delete the domain not in use and save on the memory.

The electronic device 100 may edit the domain in the order in which the data is stored. That is, the electronic device 100 may determine the priority order of the domain according to the size or number of data stored in each domain. For example, as illustrated in FIG. 6, based on the size or number of the data stored in the domain being in the order of a good eateries domain, a movie domain, an IT domain, and a sports domain, the electronic device 100 may assign a priority order in the order of the good eateries domain, the movie domain, the IT domain, and the sports domain. The electronic device 100 may output a reply with respect to the user speech according to the priority order when the user speech is input.

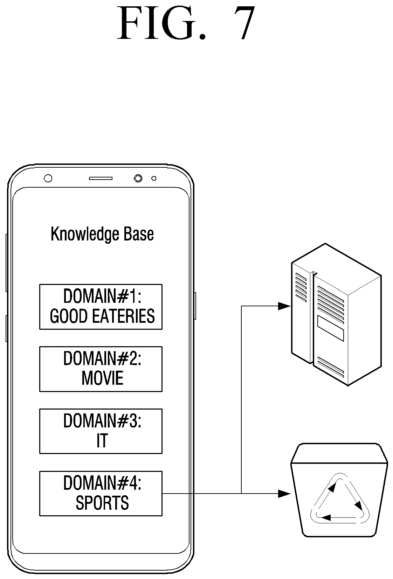

FIG. 7 is an example view illustrating a domain management method according to an embodiment of the disclosure.

The electronic device 100 may store various data in the knowledge database 460 according to the various embodiments illustrated in FIGS. 5A to 6. Based on data being stored in the knowledge database 460 increasing, the electronic device 100 may remove a portion from among the stored data and secure memory space. For example, the electronic device 100 may first delete the data which was first stored. Alternatively, the electronic device 100 may first delete the data with the minimum number of times used.

The electronic device 100 may not only remove a portion from among the data, but also transmit the data to the external server. That is, the electronic device 100 may transmit old data (or, data not being used) to the external server such as a personal cloud server and secure memory space of the electronic device 100.

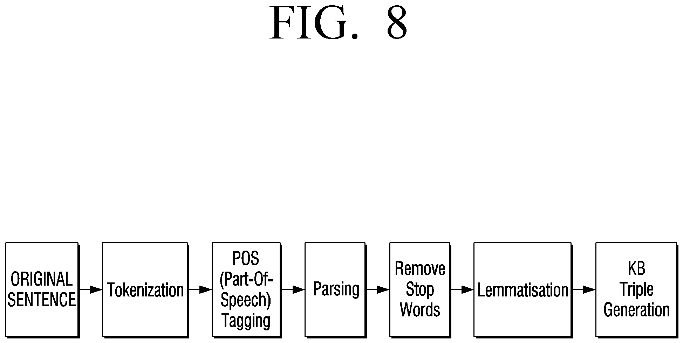

FIG. 8 is an example view illustrating a method of obtaining data which is stored in a knowledge database according to an embodiment of the disclosure.

Based on an application or the like being executed, the electronic device 100 may obtain the name of the application being executed, the name of the content being executed in the application and the function being executed in the application and store in the knowledge database 460.

The electronic device 100 may convert data identified in the application or web content to text and perform tokenization. The tokenization refers to work of classifying text on a word basis. When tokenization is complete, the electronic device 100 may perform part of speech tagging (POS). POS refers to work of identifying part-of-speech of words within the text and attaching tags. The electronic device 100 performs parsing of text, and may remove a pre-set stop word. After the stop word is removed, the electronic device 100 may determine a headword (i.e., Lemmatisation). The determining of the headword may refer to the process of grouping inflected forms of words so that the words may be analyzed as a single item, identified by the lemma of the word or dictionary form. Through the above-described process, the electronic device 100 may obtain the name of the application, the name of the content, and the name of the function and store in the knowledge database 460.

For example, the electronic device 100 may execute a news article on a web page. The electronic device 100 may obtain the original sentence (e.g., Samsung research has AI Center.) of the corresponding news. The electronic device may separate the original sentence through tokenization, POS, or the like. For example, the original sentence may be classified as "(Samsung research)-noun phrase, (has)-verb, (AI Center)-noun phrase." The electronic device 100 may generate a tuple from the separated sentence, generalize the generated tuple, and store the tuple structure in the knowledge database 460. For example, based on the generated tuple being "Samsung research, AI Center, have," the electronic device 100 may store data such as "Samsung research, AI Center, have," "Samsung research, AI Center, contain," and "Samsung research, AI Center, include" in the knowledge database 460.

As described above, the data stored in the knowledge database 460 may be generated under a specific circumstance. For example, the data stored in the knowledge database 460 may be generated when any one condition from among when the user command is not input to the electronic device, when the electronic device is in charging, the condition being the early hours (e.g., between 00:00 AM and 06:00 AM), or the like is satisfied. That is, the data stored in the knowledge database 460 may be generated in a situation where the user is not using the electronic device 100 and the electronic device 100 may be used effectively.

Based on a user question being input in a state in which the data is stored in the knowledge database 460, the method of outputting a response with respect to the user question will be described below by the embodiments of FIGS. 5A to 8.

Based on the user question being input, the electronic device 100 may grasp the intent of the user question. Specifically, the electronic device 100 may grasp the intent with respect to the user speech through a natural language understanding part 420. The electronic device 100 may determine a domain suitable to the intent with respect to the user speech based on the intent with respect to the user speech and the domain stored in the knowledge database 460. The electronic device 100 may determine the similarity of the grasped user intent and the plurality of domains stored in the knowledge database 460, and determine the domain which is most similar with the user intent. The electronic device 100 may output a result value with respect to the user intent based on the data included in the determined domain and the intent with respect to the user speech. The electronic device 100 may determine the grasped user intent and the similarity of the plurality of data included in the determined domain, and determine data which is most similar with the user intent. The electronic device 100 may output a reply with respect to the user question based on the determined data.

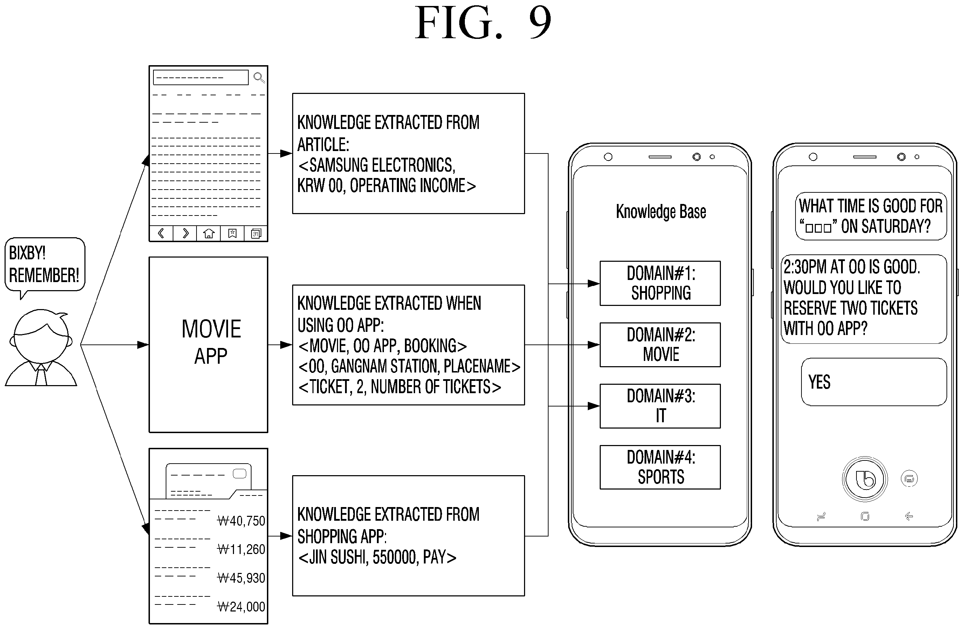

FIGS. 9 to 11B are example views illustrating the various embodiments according to the disclosure.

FIG. 9 is an example view illustrating a method of outputting a question with respect to a user speech based on an electronic device operating an application according to an embodiment of the disclosure.

As described above, the electronic device 100 may store data obtained based on using various applications or web content in the knowledge database 460. That is, the electronic device 100 may determine domain and data stored in the knowledge database 460 based on the application or web content. For example, when the electronic device 100 executes a news article of a web browser, the electronic device 100 analyzes the news article to determine the domain as an IT domain, obtain data such as "Samsung Electronics, KRW OO, operating income" and store the data in the knowledge database 460. According to another embodiment, when the electronic device executes a movie reservation application, the electronic device 100 may determine the domain as a movie domain based on the movie application, and store data such as "movie title, movie application name, reservation." Alternatively, the electronic device 100 may store data such as "movie theater, movie theater location, movie theater name" based on the movie application. Alternatively, the electronic device 100 may store data such as "movie ticket, number of movie ticket" based on the movie application. According to another embodiment, when the electronic device 100 executes an application related to payment details, the electronic device 100 may analyze the payment detail and store "eatery name, price, function (payment, cancel, etc.)."

Based on a speech of "What time is good for OOO movie this Saturday?" being input while data is stored in the knowledge database 460, the electronic device 100 may output a suitable reply based on the user speech. For example, the electronic device 100 may check that there is no schedule of the user after 2:00 PM Saturday based on information obtained from the calendar application, check that the user usually makes movie reservation with OOO application based on information stored in the knowledge database 460, and output a reply such as "2:30 PM at OOO movie theater is good. Would you like to reserve two tickets with OOO application?" The electronic device 100 may obtain information related to the seat preferred by the user, number of movie tickets for reservation, information related to the location of the movie theater, and reserve a movie theater and seat of a suitable location for the user.

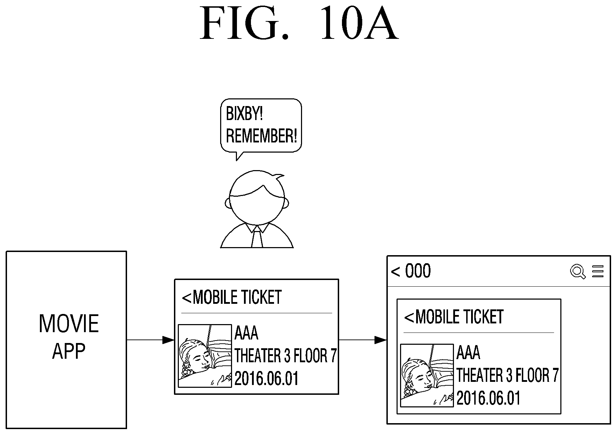

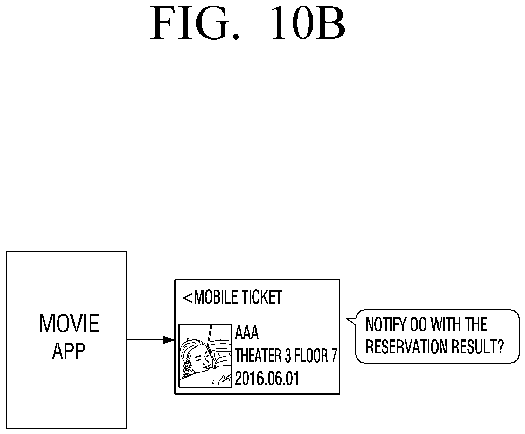

FIGS. 10A and 10B are example views illustrating a method of recommending an application operation of user according to another embodiment of the disclosure.

As illustrated in FIG. 10A, the electronic device 100 may receive input of a user command (e.g., "Bixby! Remember!") for storing a series of operations such as reserving a movie through a movie application, and sharing the movie reservation content to another user. Specifically, the electronic device 100 may store a series of operations such as capturing the reservation screen after reserving the movie through the movie application, and sharing to another user through a chat application in the knowledge database 460. Then, as illustrated in FIG. 10B, when the reservation screen is executed through the movie application, the electronic device 100 may recommend sharing the corresponding reservation screen to another user through the chat application. That is, the electronic device 100 may not only store data related to the one application or the web content in the knowledge database 460, but also store the one data related to the plurality of applications or the plurality of web contents in the knowledge database 460. In other words, the electronic device 100 may not only store data included in the application or web content itself, but also a plurality of user commands (e.g., reserve movie, share pictures, etc.) input to the application or web content in the knowledge database 460, and based on a portion from among the stored plurality of user commands being input, recommend a user command that is not input from among the plurality of user commands.

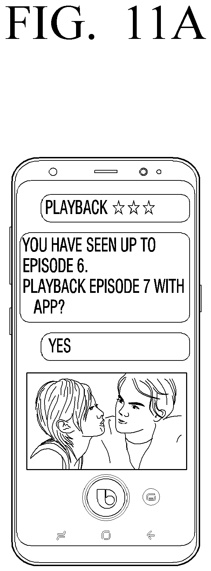

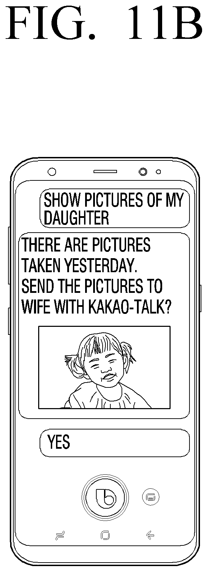

FIGS. 11A and 11B are example views illustrating various embodiments according to the disclosure.

As illustrated in FIG. 11A, based on a user command of "playback OOO" being input, the electronic device 100 may search for OOO content and the related data in the knowledge database 460. If at this time, the user has viewed the OOO content by up to episode 6, and the viewing record is stored in the knowledge database 460 through a specific application, the electronic device 100 may output a response of "You have seen up to episode 6. Playback episode 7 with OOO application?"

As illustrated in FIG. 11B, based on a user command of "Show pictures of my daughter" being input, the electronic device may output a reply such as "There are pictures taken yesterday. Send the pictures to wife through OO application?" That is, the electronic device 100 may not only provide a reply (search for pictures of daughter) to the user question, but also recommend an additional action not instructed by the user. In this case, the data related to a series of operations of searching by the user for pictures of the daughter and then transmitting the pictures to the wife through the OO application may be stored in the knowledge database 460.

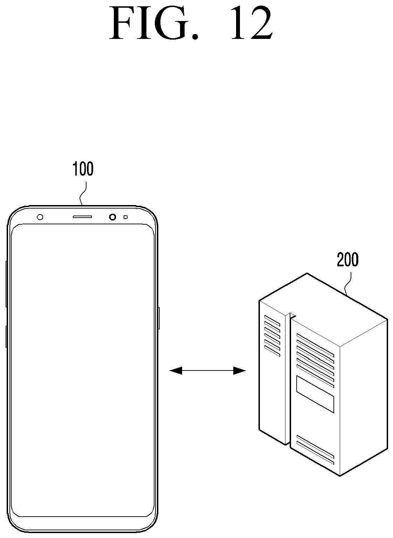

As described above, the grasping of the user intent corresponding to the user speech and generating a natural language corresponding to the result data on the user intent may be performed by the electronic device 100, but the embodiment is not limited thereto. That is, as illustrated in FIG. 12, the grasping of the user intent corresponding to the user speech and the generating the natural language corresponding to the result data on the user intent may be performed by a server 200. In other words, based on the user speech being input, the electronic device 100 may transmit the user speech to the server 200, and the server 200 may grasp the user intent corresponding to the received user speech, and generate the natural language corresponding to result data on the user intent and transmit the generated natural language to the electronic device 100.

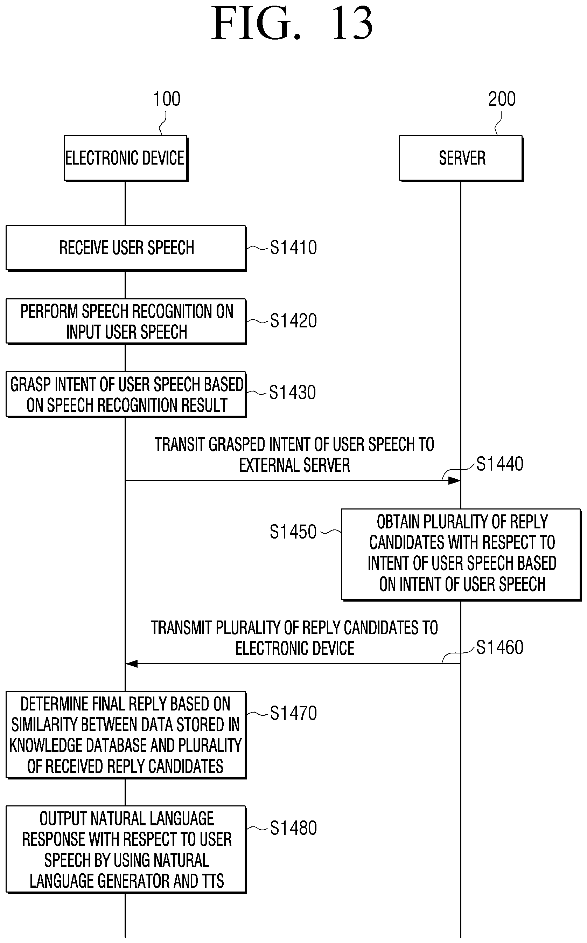

FIG. 13 is a system diagram illustrating an operation of an electronic device and a server according to an embodiment of the disclosure.

In the above-described embodiment, the method of outputting a reply based on the knowledge database 460 by the electronic device 100 has been described, but the embodiment is not limited thereto. That is, the electronic device 100 may receive a plurality of reply candidates corresponding to the user speech from the server 200, and output a reply with respect to the user speech based on the plurality of received reply candidates and data stored in the knowledge database 460.

First, the electronic device 100 may receive input of the user speech (S1410). Based on the receiving input of the user speech, the electronic device 100 may perform speech recognition on the input user speech (S1420). Specifically, the speech recognition may be performed through an automatic speech recognition part 410.

The electronic device 100 may grasp the intent of the user speech based on the speech recognition result (S1430). The electronic device 100 may transmit the intent of the grasped user speech to an external server 200 (S1440).

The server 200 may obtain a plurality of reply candidates with respect to the intent of the user speech based on the intent of the user speech (S1450). The server 200 may obtain a plurality of reply candidates based on the database included in the server 200. The server 200 may input a plurality of data included in the intent of the user speech and the database in the artificial intelligence model, and obtain data similar to the intent of the user speech as reply candidates. For example, based on the intent of the user speech being a movie recommendation, the server 200 may obtain reply candidates such as a reply candidate related to the order of movies currently screening, and a reply candidate related to the order of movies by genre.

The server may transmit the plurality of obtained reply candidates to the electronic device 100 (S1460). The electronic device 100 may determine the final reply based on the similarity between the data stored in the knowledge database 460 and the plurality of received reply candidates (S1470). The electronic device 100 may input the data stored in the knowledge database 460 and the data on the plurality of received reply candidates to the artificial intelligence model and determine a domain most similar to the intent of the user speech, and determine the data similar to the intent of the user speech from among the data included in the determined domain as the final reply. For example, based on the electronic device 100 receiving a reply candidate related to the order of movie currently screening and a reply candidate related to the order of movie per genre from the server, the electronic device 100 may determine a movie domain from among the plurality of domains from the received reply candidates and recommend a movie similar to the intent of the user question from among the data included in the movie domain. For example, based on information reserving a movie through a movie application and information related to an action movie being included in a movie domain of the knowledge database 460, the electronic device 100 may output a reply for reserving the action movie from among the movies currently screening. Alternatively, based on there being no action movie from among the movies currently screening, the electronic device 100 may output a reply for reserving a movie with the most reservation numbers from among the movies currently screening. Alternatively, based on there being no action movie from among the movies currently screening, the electronic device 100 may download a movie with the highest number of views in the action movie genre, or output a reply recommending the viewing thereof. That is, the electronic device 100 may recommend a reply with respect to the user question according to the similarity between the data included in the determined domain and the plurality of reply candidates.

The electronic device 100 may use the natural language generator 440 and the TTS 450 to output a natural language response with respect to the user speech (S1480).

In the embodiment of FIG. 13, the speech recognition has been described as being performed by the electronic device 100, but the embodiment is not limited thereto. For example, the electronic device 100 may include only the artificial intelligence model for calculating the similarity of the knowledge database 460 and the plurality of reply candidates and between the data of the knowledge database 460. In this case, the electronic device 100 may transmit the user speech to the server 200 and the server 200 may process speech recognition, dialog management, natural language generation, or the like, and the electronic device 100 may determine the final reply candidate from among the plurality of reply candidates.

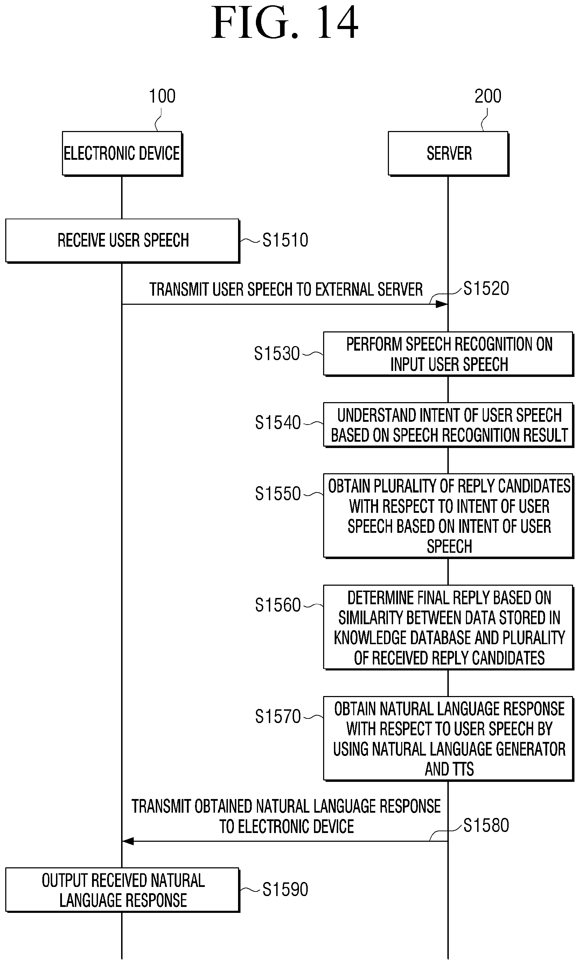

FIG. 14 is a system diagram illustrating an operation of an electronic device and a server according to another embodiment of the disclosure.

As illustrated in FIG. 14, the server 200 may include both the speech recognition system and the knowledge database 460. The server 200 may be comprised of a typical external server, or may be comprised of a personal cloud server.

First, the electronic device 100 may receive a user speech (S1510). The electronic device 100 may transmit the received user speech to the server 200 (S1520). The server 200 may perform a speech recognition on the received user speech (S12530). Specifically, the speech recognition may be performed through an automatic speech recognition.

The server 200 may grasp the intent of the user based on the speech recognition result (S1540), and obtain a plurality of reply candidates with respect to the intent of the user speech based on the intent of the user speech (S1550). The server 200 may obtain a plurality of reply candidates based on the database included in the server 200. For example, the server 200 may input the intent of the user speech and the plurality of data included in the database to the artificial intelligence model, and obtain data similar to the intent of the user speech as a reply candidate.

The server 200 may determine the final reply based on the similarity between the data stored in the knowledge database and the plurality of received reply candidates (S1560). The server 200 may input the data stored in the knowledge database and the data on the plurality of received reply candidates to the artificial intelligence model to determine the data similar to the intent of the user speech as the final reply.

The server 200 may use the natural language generator and the TTS to obtain a natural language response with respect to the user speech (S1570), and transmit the obtained natural language response to the electronic device 100 (S1580). The electronic device 100 may output the received natural language response (S1590).

In the disclosure, the user speech has been described as being input and the a natural language response with respect to the input user speech has been described as being output, but the embodiment is not limited thereto. That is, the user question input to the electronic device 100 and the response being output may not be in speech form but in text form.

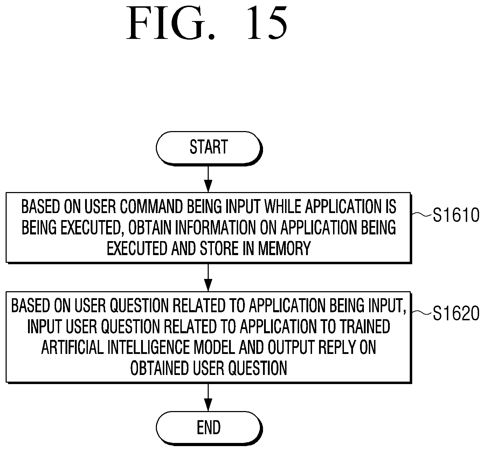

FIG. 15 is a flowchart illustrating a control method of an electronic device according to an embodiment of the disclosure.

The electronic device 100 may execute an application (S1610). Specifically, based on a user command for executing an application being input, the electronic device 100 may execute an application corresponding to the user command. The electronic device 100 may not only execute the application, but also the web browser, web content, or the like.

Based on a user command being input, the electronic device 100 may obtain information on an application being executed and store in the memory (S1620). Specifically, the electronic device 100 may store information on the application being executed in the knowledge database 460. The user command may be a speech command (e.g., "Bixby! Remember!") or a command for pushing a button provided on the electronic device 100 in a specific method. The information on the application being executed may be information related to the name of the application being executed, the name of the content being executed by the application, the function being executed by the application, or the like. Alternatively, the information on the application may be information related to the content (e.g., news article) displayed by the application. Alternatively, information related to the application may be information related to the operation of the application.

Based on the user question related to the application being input as an input value to the artificial intelligence model, the electronic device 100 may output a reply to the user question determined based on information on the stored application. Specifically, the electronic device 100 may calculate the similarity of the user question and the data stored in the knowledge database 460 by using the artificial intelligence model, and output a reply related to the data with the highest similarity as a reply to the user question. The electronic device 100 may transmit the user speech to the server 200, and the server 200 may transmit a plurality of reply candidates with respect to the user speech to the electronic device 100. In this case, the electronic device 100 may calculate the similarity of the plurality of reply candidates and the data stored in the knowledge database 460 by using the artificial intelligence model, and output a reply candidate with the highest similarity as a reply to the user question.

The terms "part" or "module" used in the disclosure may include a unit configured as a hardware, software, or firmware, and may be used interchangeably with terms such as, for example, logic, logic blocks, parts, or circuits. "Part" or "module" may be a part integrally formed or a minimum unit or a part of the part performing one or more functions. For example, a module may be configured to the form of an application-specific integrated circuit (ASIC).

One or more embodiments may be implemented with software including instructions stored in a machine-readable storage media (e.g., computer). The machine may call an instruction stored in the storage medium, and as a device capable of operating according to the called instruction, may include an electronic device (e.g., electronic device 100) according to embodiments. Based on the instruction being executed by the processor, the processor may directly or under the control of the processor perform a function corresponding to the instruction using different elements. The instructions may include a code generated by a compiler or executed by an interpreter. The machine-readable storage media may be provided in the form of a non-transitory storage medium. Herein, "non-transitory" merely means that the storage medium is tangible and does not include a signal and does not distinguish that data is permanently or temporarily stored in the storage medium.

According to an embodiment, a method according to one or more embodiments may be provided in a computer program product. The computer program product may be exchanged between a seller and a purchaser as a commodity. The computer program product may be distributed in the form of a machine-readable storage medium (e.g., a compact disc read only memory (CD-ROM)) or distributed online through an application store (e.g., PLAYSTORE™). In the case of online distribution, at least a portion of the computer program product may be at least stored temporarily in a storage medium such as a manufacturer's server, a server of an application store, or a memory of a relay server, or temporarily generated.

Each of the elements (e.g., a module or a program) according to various embodiments may be composed of a single entity or a plurality of entities, and some sub-elements of the abovementioned sub-elements may be omitted, or different sub-elements may be further included in various embodiments. Alternatively or additionally, some elements (e.g., modules or programs) may be integrated into one entity to perform the same or similar functions performed by each respective element prior to integration. Operations performed by a module, program, or other element, in accordance with various embodiments, may be performed sequentially, in a parallel, repetitive, or heuristically manner, or at least some operations may be performed in a different order, omitted or a different operation may be added.

## Claims

1. A control method of an electronic device, comprising:
obtaining, based on a user command being input while an application is executed, at least one from among a type of the application, a content information related to the application being executed, and a function used through the application, and storing in a memory; and
inputting, based on a user question related to the application being input, the user question related to the application to a trained artificial intelligence model and outputting a reply with respect to the obtained user question,
wherein the reply to the user question is determined based on at least one from among the type of the application, the content information related to the application being executed, and the function used through the application.

2. The method of claim 1, wherein the storing comprises:
extracting, based on the application being executed comprising a text, key information of the text and storing.

3. The method of claim 1, wherein the storing comprises:
storing, based on a user interaction which performs a function on the application being executed being detected, a history information comprising information on the performed function and the user interaction.

4. The method of claim 1, wherein the outputting is **characterized by** outputting at least one from among providing a search result with respect to the user question, performing an action with respect to the user question, and performing an application function with respect to the user question.

5. The method of claim 1, wherein the outputting comprises:
recommending, based on the user question being a question related to content search, an application for playing back the searched content based on information related to the application.

6. The method of claim 1, wherein the outputting comprises:
transmitting, based on the user question being input, the user question to an external server;
receiving, from the external server, a reply candidate with respect to the user question; and
outputting a reply with respect to the user question based on the received reply candidates and the information stored in the memory.

7. The method of claim 1, wherein the storing comprises storing at least one from among a domain information on the application being executed and a type of the application, content information related to the application being executed and the function used through the application, and
wherein the artificial intelligence model is **characterized by** obtaining a reply with respect to the user question based on at least one from among the stored domain information and the type of the application, the content information related to the application being executed and the function used through the application.

8. The method of claim 1, wherein the user question is **characterized by** being at least one of a user speech or a text.

9. An electronic device, comprising:
a memory; and
a processor configured to execute an application stored in the memory,
wherein the processor is configured to obtain, based on a user command being input while the application is executed, at least one from among a type of the application, a content information related to the application being executed, and a function used through the application and store in the memory, and input, based on a user question related to the application being input, a user question related to the application to a trained artificial intelligence model and output a reply to the obtained user question, and
wherein the reply to the user question is determined based on at least one from among the type of the application, the content information related to the application being executed, and the function used through the application.

10. The electronic device of claim 9, wherein the processor is configured to extract, based on the application being executed comprising a text, key information of the text and store in the memory.

11. The electronic device of claim 9, wherein the processor is configured to store, based on a user interaction performing a function on the application being executed being detected, a history information comprising information on the performed function and information on the user interaction in the memory.

12. The electronic device of claim 9, wherein the processor is configured to output at least one from among providing a search result with respect to the user question, performing an action with respect to the user question, and performing an application function with respect to the user question.

13. The electronic device of claim 9, wherein the processor is configured to recommend, based on the user question being a question related to the content search, an application for playing back the searched content based on information related to the application.

14. The electronic device of claim 9, further comprising:
a communicator,
wherein the processor is configured to transmit, based on the user question being input, the user question to an external server through the communicator, receive a reply candidate with respect to the user question from the external server through the communicator, and output a reply to the user question based on the received reply candidates and information stored in the memory.

15. The electronic device of claim 9, wherein the processor is configured to store, in the memory, at least one from among a domain information on the application being executed and a type of the application, content information related to the application being executed and a function used through the application, and
wherein the artificial intelligence model is configured to obtain a reply to the user question based on at least one from among the stored domain information and type of the application, content information related to the application being executed, and the function used through the application.
